# EUROPÄISCHE PATENTANMELDUNG

(11) **EP 0 604 804 A2**
(43) Veröffentlichungstag der Anmeldung: **06.07.1994**
(21) Anmeldenummer: 93119919.4
(22) Anmeldetag: 10.12.1993
(51) Int. Cl.: H01B 3/08, B32B 5/28, B32B 33/00

(54) **Isolierband und Verfahren zu seiner Herstellung**

(30) Priorität: 28.12.1992 DE 4244298
(71) Anmelder: ASEA BROWN BOVERI AG, CH-5401 Baden (CH)
(72) Erfinder: Schuler, Roland, CH-5430 Wettingen (CH)
(74) Vertreter: Hetzer, Hans Jürgen

(57) **Zusammenfassung**

Zur Verbesserung der thermischen Leitfähigkeit der Hauptisolation eines Leiterstabes einer elektrischen Maschine wird ein Isolierband vorgeschlagen, das aus einer oder mehreren Glasgewebe- (6) und Glimmerschichten (5) besteht. Nur im wesentlichen die Maschen des aus Glasfäden (7) aufgebauten Glasgewebes (6) sind mit einem Harz (8) gefüllt, das mit einem Füllmittel versehen ist, das mikroskopisch kleine Partikel (9) enthält mit einer Wärmeleitfähigkeit grösser als die des Harzes. Zum Schutz der Glasfäden (7) des Gewebes sind dessen Fäden (7) mit einem Schutzüberzug (10) aus Harz oder Lack versehen, wobei dieser Schutzüberzug (10) im wesentlichen nur die Fäden des Glasgewebes (6) umgibt, im übrigen jedoch die Maschen des Gewebes nicht ausfüllt.

Eine aus einem solchen Isolierband aufgebaute Hauptisolation erfüllt alle Anforderungen hinsichtlich mechanischer und thermischer Beständigkeit, elektrischer Festigkeit.

## Beschreibung

### TECHNISCHES GEBIET

Die Erfindung bezieht sich auf ein aus einer oder mehreren Gewebe- und Glimmerschichten bestehendes Isolierband, wobei im wesentlichen die Maschen des aus Fäden aufgebauten Gewebes mit einem Harz gefüllt sind, das mit einem Füllmittel versehen ist, das mikroskopisch kleine Partikel enthält mit einer Wärmeleitfähigkeit grösser als die des Harzes.

Die Erfindung bezieht sich ferner auf ein Verfahren zur Herstellung eines solchen Isolierbandes.

### TECHNOLOGISCHER HINTERGRUND UND STAND DER TECHNIK

Grosse elektrische Maschinen mit indirekt gekühlter Statorwicklung stellen hohe Anforderungen an die Temperaturbeständigkeit der Wicklungisolation. Weil die im Leiterkupfer entstehende Wärme über die Hauptisolation zum (gekühlten) Statorblechkörper abgeführt werden muss, kann diese nicht beliebig dick gemacht werden, andererseits ist bei Hochspannungsmaschinen mit Nennspannungen von 16 kV und darüber eine bestimmte minimale Dicke der Hauptisolation einzuhalten. Es besteht daher ein grosses Bedüfnis nach hochspannungfesten und gleichzeitig thermisch gut leitenden Isolationsmaterialien.

Die Hautpisolation der Statorwicklung nach der US-A-4 806 806 oder der inhaltsgleich EP-A-0 266 602 besteht aus einem mehrschichtigen Isolierband bekannt, das in vielen Lagen um das Leiterbündel gewickelt ist. Das Isolierband ist entweder vorgängig mit Tränkharz versehen worden, oder es wird erst nach dem Aufwickeln des Isolierbandes appliziert. Das Isolierband selbst besteht aus mehreren dünnen Glimmerschichten und verstärkenden Glasgewebelagen. Zur Verbesserung der Wärmeleitfähigkeit ist dem Tränkharz ein gut wärmeleitendes anorganisches Füllmittel, z.B. Bornitrid, Aluminiumnitrid, Siliziumnitrid, Alumniumoxid, Magnesiumoxid, Berylliumoxid oder Siliziumcarbid, mit einer Korngrösse von 0,1 - 15 µm zugemischt, wobei der Füllgrad mindestens 90 Gew% in den Maschen des Glasgewebes beträgt.

In der US-A-4,806,806 wird nun darauf hingeweisen, dass es von grosser Bedeutung sein, mit kleinen Korngrössen zu arbeiten, weil einerseits dadurch die Homogenität der Durchmischung verbessert, andererseits die Gefahr der Beschädigung der empfindlichen Glimmerschicht herabgesetzt werde. Ausser acht gelassen haben die Erfinder dieser Patentschrift jedoch die Tatsache, dass die Körner des Füllmittels auch und in besonderem Masse die Gewebefäden des Glasgewebes mechanisch angreifen. Diese Gewebefäden bestehen aus feinen bis feinsten Glasfasern, die miteinander verzwirnt sind, wobei der Faserdurchmesser in der Grössenordnung der Korngrösse des Füllmittels liegt. Diese scharfkantigen Körner können schon beim Wickeln und erst recht bei späteren Pressvorgängen die Gewebefäden beschädigen, so dass das Glasgewebe die ihm zugedachte Aufgabe, Träger und Verstärkung für den Glimmer zu sein, nicht mehr oder nur unvollkommen erfüllen kann.

### KURZE DARSTELLUNG DER ERFINDUNG

Der Erfindung liegt die Aufgabe zugrunde, ein Isolierband zu schaffen, das ohne Beeinträchtigung seiner elektrischen Ioslationseigenschaften und seiner Festigkeit eine vergleichsweise hohe thermische Leitfähigkeit aufweist.

Aufgabe der Erfindung ist es ferner, ein Verfahren zur Herstellung eines solchen Bandes anzugeben.

Diese Aufgabe wird erfindungsgemäss dadurch gelöst, dass die Fäden des Gewebes mit einem Schutzüberzug aus Harz oder Lack versehen ist, wobei dieser Schutzüberzug im wesentlichen nur die Fäden umgibt, im übrigen jedoch die Maschen des Gewebes nicht ausfüllt, und dass der Anteil Glimmer gegenüber dem Füllmittel in Gew% ausgedrückt grösser oder mindestens gleich 1 ist.

Ein Isolierung, die aus derart aufgebauten Isolierbändern besteht, zeichnet sich durch hohe elektrische, thermische und mechanische Lebensdauer aus. Weil sich das mit dem Füllmittel versetzte Tränkharz sich im wesentlichen nur zwischen den Maschen des Gewebes, nicht jedoch in der Glimmerschicht befindet, wird die Spannungsfestigkeit der Isolation sogar noch erhöht. Die scharfkantigen Körner des Füllmittels können die empfindlichen Fäden bzw. die Fasern, aus denen die Fäden bestehen, nicht anritzen, so dass auch die mechanische Festigkeit während der Herstellung des Bandes und seiner Applikation auf den Leiterstab sowie im späteren Betrieb erhalten bleibt. Die gute thermische Ankopplung benachbarter Glimmerlagen - diese sind ohnehin selbst thermisch gut leitend - ist durch das nunmehr ebenfalls thermisch gutleitende Tränkharz gewährleistet.

Bei der Herstellung des Isolierbandes wird dabei im wesentlichen so vorgegangen, dass zunächst die Fäden des Gewebes mit einem dünnflüssigen Harz, vorzugsweise Epoxidharz, beschichtet werden, so dass im wesentlichen nur die Fäden mit einer Schutzschicht überzogen werden, das Harz jedoch nicht die Maschen des Gewebes ausfüllt. Danach wird das Füllmittel, suspendiert in einem Bindeharz, durch ein Rollen-Kalandrierverfahren auf das Gewebe aufgebracht. Anschliessend wird das derart vorbehandelte Gewebe mit der Glimmerschicht verklebt.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Schnitt durch einen aus gegeneinander isolierten Teilleitern aufgebauten, mit einer Hauptisolation versehenen Leiterstab einer elektrischen Maschine;
- Fig.2: einen stark vergrösserten Ausschnitt aus Fig.1, welcher den Aufbau der Hauptisolation verdeutlicht.

### WEGE ZUR AUSFÜHRUNG DER ERFINDUNG

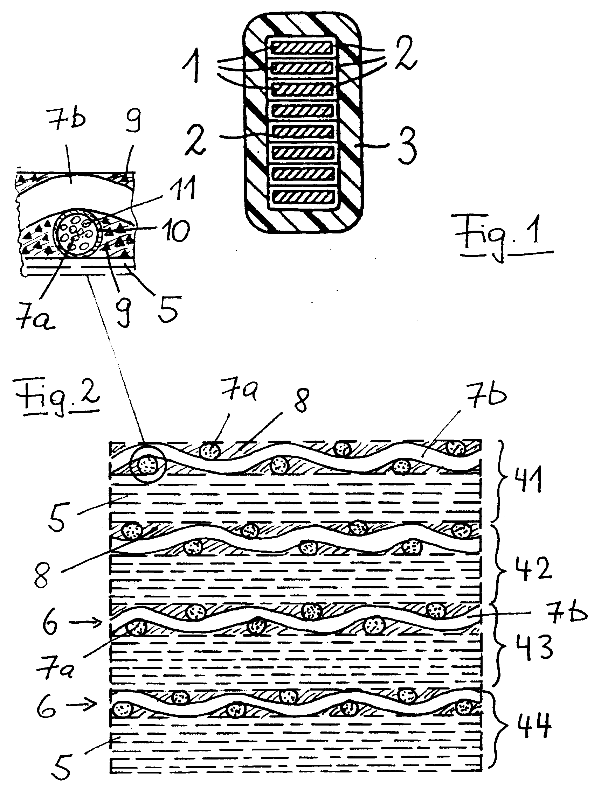

Gemäss Fig.1 besteht ein Leiterstab einer elektrischen Maschine aus einer Vielzahl gegeneinander isolierter Teilleiter 1, die jeweils mit einer Teilleiterisolation 2 versehen sind. Die zu einem Leiterbündel zusammengefassten Teilleiter 1 sind von einer Hauptisolation 3 umgeben.

Im stark vergrösserten Ausschnitt gemäss Fig.2 ist der schichtweise Aufbau der Hauptisolation aus einer Vielzahl übereinander gewickelter Isolierbänder 41,42,43,44 zu erkennen.
Jedes Isolierband 41,42,43,444,.. weist zwei Schichten oder Lagen auf: eine Glimmerschicht 5 und eine Glasgewebeschicht 6. Die Maschen des Glasgewebes, mit Kettfäden 7a und Schussfäden 7b, d.h. der Raum zwischen zwei benachbarten Glasfäden des Glasgewebes 6 ist vollständig von einem Harz 8 ausgefüllt, dem ein Metalloxidpulver 9 mit Korngrössen zwischen 0,1 und 15 µm zugesetzt wurde. Die Glimmerschichten 5 hingegen enhalten praktisch kein Metalloxidpulver.

Insoweit entspricht der Aufbau des Isolierbandes demjenigen nach der eingangs genannten US-A-4,806,806.

Erfindungsgemäss sind nun die Kettfäden 7a und die Schussfäden 7b des Glasgewebes mit einer Schutzschicht 10 versehen, deren Dicke in der Grössenordnung der Grösser der Körner 9 liegt und etwa 1 µm bis 10 µm, vorzugsweise 3 µm bis 5 µm, beträgt. Diese Schutzschicht 10 verhindert ein Anritzen der aus hauchdünnen Glasfasern 11 bestehenden Glasfäden. Die Schutzschicht 10 besteht vorzugsweise aus flexibilisiertem Epoxidharz, das mit dem späteren Tränkharz veträglich ist und auch die Glasfäden 7a und 7b und Glasfasern 11 gut benetzt.

Eine bevorzugte Ausführungsform des erfindungsgemässen Isolierbandes weist folgende typische Kenngrössen auf:

| | |
|---|---|
| Schichtdicke der Glasgewebeschicht 6: | 50 µm |
| Schichtdicke der Glimmerschicht 5: | 100 µm |
| Dicke der Schuss- und Kettfäden: | 25 µm |
| Dicke der Fasern bzw. Filamente: | 8 µm |
| Dicke der Schutzschicht 10: | 5 µm |
| Korngrösse des Aluminiumoxidpulvers: | 3 µm |
| Bindeharz 8: | Epoxidharz |

Anstelle von Glasgewebe kann auch ein sogenanntes Mischgewebe eingesetuzt werden, mit Kettfäden 7a aus Glasfäden und Schussfäden 7b aus Kunststoff, z.B. Polyster.

Bei der Herstellung des Isolierbandes wird dabei im wesentlichen so vorgegangen, dass zunächst die Fäden 7 des Glasgewebes 6 mit einem dünnflüssigen Harz, vorzugsweise Epoxidharz, beschichtet werden, so dass im wesentlichen nur die Fäden mit der Schutzschicht 10 überzogen werden, das Harz jedoch nicht die Maschen des Gewebes ausfüllt. Danach wird wird das Füllmittel (Harz und Metalloxidpulver) mit einem Rollen-Kalandrierverfahren auf das Glasgewebe aufgebracht. Anschliessend wird das derart vorbehandelte Gewebe mit der Glimmerschicht 5 verklebt.

### BEZEICHNUNGSLISTE

- 1: Teilleiter
- 2: Teilleiterisolation
- 3: Hauptisolation
- 4x: Isolierbänder
- 5: Glimmerschichten
- 6: Glasgewebeschicht
- 7a: Kettfäden
- 7b: Schussfäden
- 8: Harz
- 9: Metalloxid-Partikel
- 10: Schutzschicht
- 11: Glasfasern

## Patentansprüche

1. Die Erfindung bezieht sich auf ein aus einer oder mehreren Gewebe- (6) und Glimmerschichten (5) bestehendes Isolierband, wobei im wesentlichen die Maschen des aus Fäden (7a,7b) aufgebauten Gewebes (6) mit einem Harz (8) gefüllt sind, das mit einem Füllmittel versehen ist, das mikroskopisch kleine Partikel (9) enthält mit einer Wärmeleitfähigkeit grösser als die des Harzes, dadurch gekennzeichnet, dass die Fäden (7a,7b) des Gewebes (6) mit einem Schutzüberzug (10) aus Harz oder Lack versehen ist, wobei dieser Schutzüberzug (10) im wesentlichen nur die Fäden des Gewebes (6) umgibt, im übrigen jedoch die Maschen des Gewebes nicht ausfüllt, und dass der Anteil Glimmer gegenüber dem Füllmittel in Gew% ausgedrückt grösser oder mindestens gleich 1 ist.

2. Isolierband nach Anspruch 1, dadurch gekennzeichnet, dass das Füllmittel zumindest aus einer Komponente besteht, die aus der aus Bornitrid, Aluminiumnitrid, Siliziumnitrid, Alumniumoxid, Magnesiumoxid, Berylliumoxid oder Siliziumcarbid bestehenden Gruppe ausgewählt ist, und die Korngrösse des Füllmittels zwischen 0,1 µm und 15 µm beträgt.

3. Isolierband nach Anspruch 1 oder 2, dadurch gekennzeichnet, dass die Schutzschicht (10) aus Harz oder Lack besteht und zwischen 1 µm und 10 µm dick ist.

4. Isolierband nach einem der Ansprüche 1 bis 3, dadurch gekennzeichnet, dass das Gewebe (6) Glasgewebe oder ein Mischgewebe mit einer Kette (7a) aus Glasfäden und einem Schuss (7b) aus Kunststoff, beispielsweise Polyester, ist.

5. Verfahren zur Herstellung eines Isolierbandes nach Patentanspruch 1, dadurch gekennzeichnet, dass ausgehend von einem Gewebe zunächst die Fäden (7a,7b) des Gewebes (6) mit einem dünnflüssigen Harz, vorzugsweise Epoxidharz, beschichtet werden, so dass im wesentlichen nur die Fäden (7a,7b) mit der Schutzschicht (10) überzogen werden, das Harz jedoch nicht die Maschen des Gewebes ausfüllt, dass danach ein Harz mit Füllmittel auf das Gewebe (6) aufgebracht wird und anschliessend das derart vorbehandelte Gewebe mit einer Glimmerschicht (5) verklebt wird.
